(19) Europäisches Patentamt

European Patent Office

Office européen des brevets

(11) **EP 1 174 686 A2**

(12) **EUROPÄISCHE PATENTANMELDUNG**

(43) Veröffentlichungstag:
   **23.01.2002 Patentblatt 2002/04**

(51) Int Cl.[7]: **G01D 3/08**

(21) Anmeldenummer: **01116690.7**

(22) Anmeldetag: **17.07.2001**

(84) Benannte Vertragsstaaten:
   **AT BE CH CY DE DK ES FI FR GB GR IE IT LI LU MC NL PT SE TR**
   Benannte Erstreckungsstaaten:
   **AL LT LV MK RO SI**

(30) Priorität: **18.07.2000 DE 10035285**
   **03.08.2000 DE 10065920**

(71) Anmelder: **EADS Deutschland GmbH**
   **81663 München (DE)**

(72) Erfinder:
   • **Langmeier, Andreas, Dr.**
    **80634 München (DE)**
   • **Lohmiller, Winfried, Dr.**
    **80636 München (DE)**

(54) **Verfahren und Einrichtung zur Erkennung eines Defekts in einem Sensorsystem**

(57)   Verfahren zur Implementierung in einem Meßsystem mit einem Sensorsystem und einer Recheneinheit zur Erkennung eines Defekts in dem Meßsystem, wobei in dem Meßsystem aus zumindest einem Sensor-Wert zumindest eine Zustandsgrößen des Systems abgeleitet wird, wobei für die jeweilige Messung ein Kostenfunktionswert basierend auf der Abweichung des Meßwerts y von der Kalibrierung in Abhängigkeit eines zuvor ermittelten Zustandes x ermittelt wird und das ermittelte Quadrat der Abweichung dann mit einem entsprechenden Schwellwert verglichen wird, bei dessen Überschreiten ein Fehler identifiziert und gegebenenfalls eine geeignete System-Maßnahme ausgeführt wird.

EP 1 174 686 A2

**Beschreibung**

Die Erfindung betrifft ein Verfahren und eine Einrichtung zur Implementierung in einem Meßsystem mit einem Sensorsystem und einer Recheneinheit zur Erkennung eines Defekts in dem Meßsystem, wobei in dem Meßsystem aus zumindest einem Sensor-Wert zumindest eine Zustandsgrößen des Systems abgeleitet wird, und wobei der Defekt ein Meß-, funktioneller, algorithmischer, Software-, Hardware- oder Kalibrier- bzw. Modellier-Fehler sein kann.

Bei Systemen, deren Zustandsgrößen mittels zumindest eines Sensors eines Sensorsystems mit einer zugeordneten Recheneinheit zu erfassen sind, ist die möglichst genaue Bestimmung derselben aus zumindest einer Meßgröße je Messung oder Iterationsschritt von großer Bedeutung für die Funktionsfähigkeit des Systems. Dies gilt insbesondere für sicherheitskritische Systeme, beispielsweise Luftdatensysteme eines Flugzeugs, da bei nicht ausreichender Sicherheit für die Genauigkeit der Meßgrössen weitere Maßnahmen, wie z.B. weitere Sensoren, erforderlich sind, um die geforderte Sicherheit des Gesamtsystems zu erreichen. Wird eine Genauigkeitsaussage verletzt, so kann dies bei einem sicherheitskritischen System, wie ein Luftdatensystem oder die Bestimmung von chemischen oder nuklearen Zuständen bei Reaktionen, zu einer Katastrophe wie ein Flugzeugabsturz oder einer Explosion führen. Weiterhin müssen zur Gewährleistung einer geforderten Sicherheit Sensordefekte hoch zuverlässig erkannt und entfernt werden.

Heutige Sensorsysteme, die in entsprechenden Anwendungen Sicherheits-Anforderungen erfüllen müssen, sind nach dem allgemeinen Stand der Technik redundant aufgebaut, wobei sowohl die Sensoren als auch die Datenverarbeitung zur Ermittlung der Zustandsgrößen des Systems redundant vorgesehen sein können. In speziellen Anwendungen, beispielsweise bei geregelten Flugzeugen, werden besonders hohe Sicherheitsanforderungen die den Sensoren zugeordneten Recheneinheiten, wie die Flugrechner, mit dissimilarer Hardware und auch Software realisiert. Der Aufwand zur Erfüllung von hohen Sicherheitsanforderungen ist somit sehr groß.

Bei Systemen mit zumindest einem Sensorsystem, das zumindest einen Sensor und eine diesem zugeordnete Recheneinheit zur Ermittlung zumindest einer Zustandsgröße des Systems aufweist, sind beispielswese Verfahren bekannt, die über Kalibrierungen des Sensors einem Meßwert des Sensors gegebenenfalls in Abhängigkeit weiterer Parameter des Systems eine bestimmte Zustandsgröße zuordnet. Insbesondere ist ein Verfahren für ein Luftdatensystem bekannt, bei dem mit Hilfe einer Kostenfunktion $\chi^2(\mathbf{x}, \mathbf{y}, \mathbf{u})$, die Kalibrier-Kurven oder -Flächen umfaßt, eine Bestimmung der momentanen n-dimensionalen Zustandsgrössen $\mathbf{x}$ des Systems aus zumindest einem Sensorsignal vorgenommen wird, um die Genauigkeit und Zuverlässigkeit der zu bestimmenden Zustände $\mathbf{x}$ zu optimieren. Dieses Verfahren ist beispielsweise in Friehmelt H., Jost M., Flush Air Data System- Fortschrittliches Luftdatensystem für die Luft- und Raumfahrt, DGLR Jahrestagung 1999, Berlin, Vortrag 99-180, Seite 5, veröffentlicht. Bei diesem Verfahren werden Kalibrierkurven oder —flächen der Druckmessungen als den Meßgrössen $\mathbf{y}$ des Sensors, der allgemein ein Vektor ist, und von den Luftdaten als den gesuchten Zustandsgrössen $\mathbf{x}$ und bekannten Konfigurationen bzw. Reglereingaben $\mathbf{u}$ abhängt, verwendet. Die Kalibrierkurven oder —flächen werden dabei in Form eines vorbekannten mathematischen Zusammenhangs $\mathbf{y} = \mathbf{y}(\mathbf{x}, \mathbf{u})$ verwendet.

Diese Kostenfunktion wird für jede Messung $\mathbf{y}$ neu erstellt, da sie abhängt vom für die jeweilige Messung relevanten Meßwert $\mathbf{y}$ und gegebenenfalls dem jeweils relevanten System-Parameter $\mathbf{u}$. Für jede Kostenfunktion einer Messung wird zur Bestimmung der momentanen Zustandsgrössen $\mathbf{x}$ das Minimum der Kostenfunktion ermittelt. Dies geschieht z.B. ausgehend von einem oder mehreren Startvektoren $\mathbf{x}_0$ der Kostenfunktion mittels Verfahren nach dem Stand der Technik, z.B. mittels eines Gradientenverfahrens. Dabei wird die Kostenfunktion $\chi^2(\mathbf{x}_0, \mathbf{y}, \mathbf{u})$ ausgehend von einer zufällig gewählten Anfangsinitialisierung $\mathbf{x}_0$ des Zustandes durch eine rekursive Variation von $\mathbf{x}$ entlang des Gradienten von $\chi^2$ so lange erniedrigt bis ein lokales Minimum von $\chi^2$ bezüglich $\mathbf{x}$ erreicht wird.

Diese Verfahren nach dem Stand der Technik erlauben zwar eine Genauigkeitsvorhersage bzw. Kovarianz $\mathbf{P}$ für die zu ermittelnden Zustände $\mathbf{x}$. Diese Genauigkeitsvorhersage ist jedoch nur dann korrekt, wenn alle Meßsignale und Kalibrierflächen normale Genauigkeiten aufweisen. Wird z.B. ein Meßsignal aufgrund eines Sensordefektes ungenauer oder wird das System dekalibriert, so treffen die Genauigkeitsaussagen $\mathbf{P}$ nicht mehr zu, da die Kovarianz nur für den Zustand des intakten, und nicht des fehlerhaften Sensors oder Kalibrierung modelliert ist.

Es ist die Aufgabe der Erfindung, ein Verfahren sowie eine Einrichtung bereitzustellen, welche eine Fehlererkennung der Meßgrößen $\mathbf{y}$ und Gütebewertung der ermittelten Genauigkeitsaussagen $\mathbf{P}$ des Zustandes $\mathbf{x}$ auch bei fehlerhaftem Sensorsystem ermöglicht.

Diese Aufgabe wird mit den Merkmalen der unabhängigen Ansprüche gelöst. Weitere Ausführungsformen sind in deren Unteransprüchen angegeben.

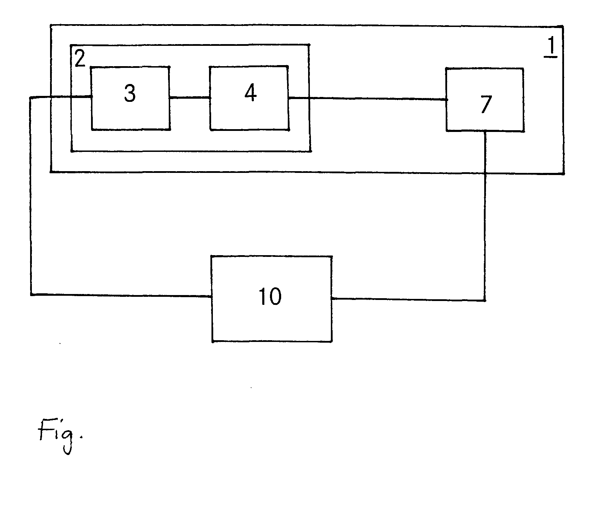

Im folgenden wird die Erfindung anhand der beiliegenden Figur 1 beschrieben, die eine schematische Darstellung eines Systems mit einem Sensorsystem, für das das erfindungsgemäße Verfahren vorgesehen ist, zeigt.

Das in der Figur 1 dargestellte System 1 weist ein Sensorsystem 2 mit zumindest einem Sensor 3 und einer Recheneinheit 4, die ein Modul oder mehrere Module umfassen kann, auf. Die Recheneinheit 4 kann dabei funktionell oder H/W-mäßig auch in einer anderen Einheit als dem Sensorsystem 2 integriert sein. Der Sensor 3 liefert zumindest einen Meßwert, aus dem die Recheneinheit 4 eine oder mehrere Zustandsgrössen ermittelt. Die Recheneinheit 4 umfaßt das erfindungsgemäße Verfahren und kann zusätzlich eine Regelungsvorrichtung zur Regelung von Zuständen bzw. Zustandsgrössen des Systems 1 umfassen. Die Recheneinheit 4 erstellt Stellsignale oder Kommandos für eine Stelleinheit 7 zur Veränderung zumindest einer Zustandsgrösse des Systems 1. Eine Änderung des Systemzustands, die mit dem Bezugzeichen 10 bezeichnet ist, wird wiederum von dem zumindest einen Sensor 3 erfaßt.

Das System 1 kann für eine Vielzahl von Anwendungen vorgesehen sein, z.B. die Ermittlung von Zustandsgrössen eines Flugzeugs aus Druckmessungen, die Bestimmung von Konzentrationen oder Temperaturen bei chemischen oder nuklearen Prozessen oder die Bestimmung von Deformationen und Kräften in der Strukturmechanik. Auch kann das System 1 ein Luftdatensystem eines Flugzeugs sein, bei dem das Sensorsystem 2 mehrere Druckbohrungen als Sensoren 3 und eine zugehörige Recheneinheit 4 zur Ermittlung von SystemZuständen umfaßt. Auch kann es sich beim Sensorsystem 2 um ein GPS, Radar- oder Intertialsystem für ein Fahrzeug zur Feststellung der Fahrzeuglage oder zur Ermittlung der Fahrzeug-Position handeln. Eine weitere Anwendung der Erfindung bezieht sich auf die Sensorik von Stellantrieben, die zur Ermittlung z.B. von der Position oder Geschwindigkeit von Komponenten desselben vorgesehen sind.

In der ein Modul oder mehrere Module umfassenden Recheneinheit 4 ist die Fehlererkennung nach der Erfindung, gegebenenfalls zusammen mit den Funktionen zur Ermittlung der Zustandsgrössen, implementiert.

In dieser sind weiterhin zur Durchführung des erfindungsgemäßen Verfahrens auch Kalibrier-Flächen oder -Kurven, kurz Kalibrierungen, zur Verwendung in einer Kostenfunktion oder mehreren derselben abgespeichert. In dem Fall, in dem die Messung der Zustände unmittelbar möglich ist, können die Kalibrierungen ein konstanter Faktor sein oder auch ganz entfallen. Die Kalibrierungen sind mit Hilfe von Versuchen oder Rechnungen vor Ablauf des Verfahrens ermittelt worden und liegen in der Recheneinheit 4 beispielsweise in Form von Tabellen vor. Die Kalibrierungen stellen einen Zusammenhang dar, bei dem aus zumindest einer Zustandsgröße Meß- oder Sensor-Werte bestimmbar sind.

Weiterhin kann in der Recheneinheit 4 kann ein Berechnungs-Modul implementiert sein, mit dem der vektorielle Systemzustand $x$ z.B. aus den Messungen $y$ bestimmt wird. Der Systemzustand oder auch die Messung können dabei jeweils auch nur durch eine Grösse beschrieben sein. Dies kann mittels einer Kostenfunktion sowie alternativ oder zusätzlich mittels Filter oder Beobachter vorliegen. Bei diesen Verfahren werden zur Ermittlung der Zustandsgrössen nach einer rekursiven Methode zusätzlich eine Anzahl von Meß- oder Zustandsgrössen aus der Vergangenheit verwendet. Auch kann die Ermittlung der Systemzustände mittels neuronalen Netzen erfolgen. Das Berechnungs-Modul ist nicht erforderlich, wenn die Messungen $y$ direkt den Systemzuständen $x$ entsprechen.

Die der Recheneinheit 4 zugeordneten Funktionen können auch aufgeteilt in mehreren Recheneinheiten und insbesondere disloziert von dem zumindest einen Sensor 3 implementiert sein.

Bei der Verwendung einer Kostenfunktion zur Bestimmung des vektoriellen Systemzustands $x$ aus den Messungen $y$ können jegliche Arten von Kostenfunktionen nach dem Stand der Technik verwendet werden.

Zur anschließenden erfindungsgemäßen Fehlererkennung ist zusätzlich eine spezielle Kostenfunktion $\chi^2(x, y, u)$ in der Recheneinheit 4 implementiert. Zur Fehlererkennung wird mit Hilfe dieser Kostenfunktion für die jeweilige Messung ein Kostenfunktionswert basierend auf der Abweichung des Meßwerts $y$ von der Kalibrierung in Abhängigkeit eines zuvor ermittelten Zustandes $x$ ermittelt. In einer speziellen Ausführungsform der Kostenfunktion errechnet diese das Quadrat der Abweichung $\chi^2$ eines tatsächlichen Meßwerts von den Kalibrierungen in Abhängigkeit des zuvor ermittelten Zustands $x$ oder eine daraus abgeleitete Funktion. Die erfindungsgemäß zur Fehlererkennung verwendete Kostenfunktion kann zusätzlich eine Gewichtung einer Abweichung des Meßwerts $y$ von der Kalibrierung $y(x, u)$ enthalten. Die Gewichtung kann durch die Meßwert- bzw. Kalibriergenauigkeit $R$, durch eine erwartete, geforderte oder geschätzte Genauigkeitsanforderung $R$, durch die Zahl von Messungen, die der Dimension des Meßvektors $y$ entspricht, oder durch eine andere geeignete Größe erfolgen. Diese Gewichtungsgrösse ist generell eine das jeweils angewendete Meßverfahren bestimmende Grösse. Für den Fall, daß die Gewichtungsgrösse eine Genauigkeit R ist, wird erfindungsgemäß folgende Grundstruktur für die erfindungsgemäße Kostenfunktion verwendet:

$$\chi^2 = [y- y(x, u)]^T R^{-1} [y- y(x, u)]$$

Die verwendeten Größen $x, y$ und $u$ sind vorzugsweise vektorielle Größen. Die Formel kann für den jeweiligen Anwendungsfall auch entsprechend ergänzt oder erweitert sein, wobei jedoch die angegebene Grundstruktur erhalten bleibt.

Diese Kostenfunktion wird für jede Messung $y$, also z.B. in jedem Interationsschritt, neu erstellt, da sie abhängt von den jeweiligen Meßwerten $y$, des Systemzustandes $x$ und gegebenenfalls von relevanten System-Parametern $u$. Der Ausdruck $[y- y(x, u)]$ wird erfindungsgemäß unmittelbar für jede Messung $y$ ermittelt. Dabei ergibt sich $y(x, u)$ aus der Kalibrierung, dem zuvor ermittelten Systemzustand $x$ und den bekannten Parametern **u**. Die Messung **y** kann sich dabei über mehrere Zeitschritte erstrecken, wobei sich dadurch ein entsprechender Zeitverzug bei der Fehlererkennung ergibt. Deshalb sind die Zahl der Zeitschritte entsprechend der System-Anforderungen zu wählen.

Die Sensorgenauigkeit **R** kann die erwartete Sensorgenauigkeit bei Normalbedingungen sein. Alternativ kann für die Sensorgenauigkeit **R** auch eine von den Nutzern der Messung **y** aufgestellte Anforderung an eine Mindest-Sensorgenauigkeit verwendet werden. Für den Fall, daß in der Recheneinheit 4 ein Beobachter oder ein Filter zur Schätzung des Zustands **x** des Systems 1 implementiert ist, kann **R** für die geschätzten Größen ebenfalls aufgrund der erwarteten Genauigkeit des Beobachters festgelegt werden.

Mit bekannten Verfahren kann auch eine Nutzeranforderung an die Genauigkeit des Zustandes **x** in eine Sensorgenauigkeit **R** umgerechnet werden. Als Sensorgenauigkeit kann also je nach Anwendungsfall eine angenommene oder eine geforderte Genauigkeit eingesetzt werden. Die Kalibriergenauigkeit kann, sofern diese für die jeweilige Anwendung von Bedeutung ist, aufgrund von Versuchen oder Rechnungen nach Verfahren nach dem Stand der Technik ermittelt werden.

In einer speziellen Ausführungsform der Erfindung kann im Beispiel der Luftdatenbestimmung die zur Fehlererkennung zu verwendende Kostenfunktion eine Gewichtung einer Abweichung des Meßwerts **y** von der Kalibrierung **y**(**x**, **u**) der Luftdaten durch die Meßwert- bzw. Kalibriergenauigkeit **R** oder durch eine Genauigkeitsanforderung **R** enthalten. Dabei kann die Kostenfunktion konkret folgendermaßen ausgeführt sein:

$$\chi^2 = [y-(c_p q_c + p_s)]^T \; [Cov(c_p)q_c{}^2 + \sigma_p{}^2]^{-1} \; [y-(c_p \; q_c + p_s)]$$

Hierbei stellt $Cov(c_p)$ die Kalibriergenauigkeit und $\sigma_p{}^2$ die Sensorgenauigkeit dar. Dabei sind **y** die Druckmessungen, $c_p$(**x**, **u**) zuvor bestimmte Kalibrier-Kurven oder-Flächen in Form eines funktionalen Zusammenhangs und $Cov(c_p)$(**x**, **u**) zuvor bestimmte Genauigkeiten der Kalibrierflächen. Der Zustand **x** wird aus den Luftdaten $\alpha$, $\beta$, $q_c$ und $p_s$ gebildet und $\sigma_p$ beschreibt die Druckwandlergenauigkeit der Druck-Öffnungen.

Nach der Errechnung des gewichteten Quadrats der Abweichung $\chi^2$ des jeweiligen Meßwerts von den Kalibrierungen mittels der Kostenfunktion wird in einer ersten Ausführungsform der Erfindung der Wert des gewichteten Quadrats bzw. der Kostenfunktion oder einer daraus abgeleiteten Funktion verglichen mit einem vorgegebenen entsprechenden Schwellwert. Dieser Schwellwert ist ein Maß für eine geforderte Sicherheit für die betroffene Zustadnsgrösse. Hierzu kann in der Recheneinheit 4 zur Durchführung dieses Schritts ein Fehlererkennungsmodul implementiert sein. Bei Überschreiten dieses Schwellwertes wird im System 1 oder einer zugeordneten Funktion das Vorliegen eines Fehlers gemeldet und falls es zur Aufrechterhaltung einer Sicherheit oder der Funktionsfähigkeit des Systems erfordert, eine entsprechende Rekonfigurations-Maßnahme durchgeführt.

In einer zweiten Ausführungsform wird die Genauigkeitsvorhersage **R** der Meßwerte **y** bzw. des Zustandes **x** mit Hilfe einer Konfidenzschätzung überprüft, welche die Konfidenz der vorhergesagten Genauigkeit erlaubt. Die Konfidenz ist die Wahrscheinlichkeit, daß die wahre Genauigkeit der Meßwerte **y** bzw. des Zustandes **x** besser als die angenommene Genauigkeit **R** ist.

Hierzu wird eine funktionale Abbildung zwischen dem berechneten Quadrat der Abweichung $\chi^2$ des jeweiligen Meßwerts von den Kalibrierungen des bestimmten Zustandes und der Konfidenz in Abhängigkeit der Anzahl redundanter Messungen vorgenommen.

Die Anzahl redundanter Messungen ergibt sich aus der Differenz zwischen der Dimension m des Meßvektors **y** und der Dimension n des ermittelten Systemzustands **x** für jeden Iterationsschritt. Alternativ oder zusätzlich kann sich die Zahl von redundanten Messungen auch aus einer Mehrzahl von Iterationsschritten mit jeweils einer Messung ergeben. Dies kann bei der Verwendung von Filtern oder Beobachtern der Fall sein. Dann beträgt die Zahl der redundanten Messungen gleich der Differenz zwischen der Zahl aller verwendeten Messungen und der Dimension n aller ermittelten Systemzustände **x**, gegebenenfalls multipliziert mit der Zahl der in der Fehlererkennung verwendeten Zeit- oder Iterationsschritte mit jeweils einer Messung.

Die so ermittelte Konfidenz wird dann, wie in der ersten Ausführungsform der erfindungsgemäßen Fehlererkennung, mit einem Schwellwert verglichen. Dieser Schwellwert definiert in der zweiten Ausführungsform eine geforderte Mindestwahrscheinlichkeit mit welcher die wahre Genauigkeit besser als obige angenommene Genauigkeit sein muß. Dessen Überschreiten löst dann eine Fehlermeldung aus.

Zur Rekonfiguration des Systems in einen fehlerfreien Systemzustand können dann entsprechende Systemmaßnahmen vorgenommen werden. Dabei muß zunächst der Fehler, d.h. insbesondere der fehlerhafte individuelle Sensor, identifiziert werden. Dazu kann eine entsprechende redundante Komponente verwendet werden, die durch Vergleich die fehlerhafte Komponente des Systems ermittelt.

Alternativ oder zusätzlich kann folgendermaßen vorgegangen werden: Ein beliebiges erstes Element der Messung **y** wird entfernt und für diese reduzierte Messung **y** der Zustand **x** nach obigen Verfahren neu bestimmt. Dann wird wieder wie oben beschrieben die Kosten $\chi^2$ und damit die Konfidenz dieser reduzierten Messung ermittelt. Ist diese Konfidenz dann unter dem jeweils vorgegebenen Schwellwert, so entspricht obiges Meßelement einer defekten Messung, welche somit erkannt wurde.

Ist der Schwellwert immer noch nicht unterschritten, dann müssen permutativ alle anderen Elemente der Messung entfernt werden bis der Schwellwert für die Konfidenz unterschritten wird. Damit ist eine Feststellung eines defekten Sensors möglich. Gelingt dies nicht, so ist die gesamter Zustand x defekt und muß als solcher deklariert werden, da er seine Konfidenzanforderungen nicht mehr erfüllt.

Dieses Verfahren erlaubt die Erkennung und Identifizierung jeglicher Fehler in der Funktionskette des Sensorsystems 2 und insbesondere Meß-Fehler, funktionelle und/oder algorithmische Fehler, Software- und/oder Hardware-Fehler sowie Kalibrier- bzw. Modellier-Fehler.

**Patentansprüche**

1.  Verfahren zur Implementierung in einem Meßsystem mit einem Sensorsystem und einer Recheneinheit zur Erkennung eines Defekts in dem Meßsystem, wobei in dem Meßsystem aus zumindest einem Sensor-Wert zumindest eine Zustandsgrößen des Systems abgeleitet wird, **dadurch gekennzeichnet, daß**

    für die jeweilige Messung ein Kostenfunktionswert basierend auf der Abweichung des Meßwerts **y** von der Kalibrierung in Abhängigkeit eines zuvor ermittelten Zustandes **x** ermittelt wird und

    daß der ermittelte Kostenfunktionswert zum Vergleich mit einem entsprechenden Schwellwert herangezogen wird, bei dessen Überschreiten ein Fehler identifiziert wird.

2.  Verfahren zur Implementierung in einem Meßsystem mit einem Sensorsystem und einer Recheneinheit zur Erkennung eines Defekts in dem Meßsystem nach dem Anspruch 1, **dadurch gekennzeichnet, daß** zur Bestimmung des Kostenfunktionswerts das Quadrat der Abweichung $\chi^2$ eines tatsächlichen Meßwerts von den Kalibrierungen in Abhängigkeit des zuvor ermittelten Zustands **x** errechnet wird.

3.  Verfahren zur Implementierung in einem Meßsystem mit einem Sensorsystem und einer Recheneinheit zur Erkennung eines Defekts in dem Meßsystem nach dem Anspruch 1 oder 2, **dadurch gekennzeichnet, daß** die Kostenfunktion mittels einer das jeweils angewendete Meßverfahren bestimmenden Grösse gewichtet ist.

4.  Verfahren zur Implementierung in einem Meßsystem mit einem Sensorsystem und einer Recheneinheit zur Erkennung eines Defekts in dem Meßsystem nach dem Anspruch 3, **dadurch ge-** **kennzeichnet, daß** die Gewichtung der Kostenfunktion durch erwartete, geforderte oder geschätzte Genauigkeit **R** oder durch die Zahl von Messungen, die der Dimension des Meßvektors **y** entspricht, erfolgt.

5.  Verfahren zur Implementierung in einem Meßsystem mit einem Sensorsystem und einer Recheneinheit zur Erkennung eines Defekts in dem Meßsystem nach einem der voranstehenden Ansprüche, **dadurch gekennzeichnet, daß** zum Vergleich mit dem Schwellwert der ermittelte Kostenfunktionswert direkt mit einem entsprechenden Schwellwert verglichen wird, wobei ein Überschreiten des Schwellwertes eine Fehlermeldung verursacht.

6.  Verfahren zur Implementierung in einem Meßsystem mit einem Sensorsystem und einer Recheneinheit zur Erkennung eines Defekts in dem Meßsystem nach einem der Ansprüche 1 bis 4, **dadurch gekennzeichnet, daß** zur Durchführung des Vergleichs mit dem Schwellwert aus dem Wert der Kostenfunktion eine Konfidenz ermittelt wird und die Konfidenz mit einem Konfidenz-Schwellwert verglichen wird, wobei ein Überschreiten des Schwellwertes eine Fehlermeldung verursacht, wobei zur Boldung der Konfidenz eine funktionale Abbildung zwischen dem berechneten Quadrat der Abweichung $\chi^2$ des jeweiligen Meßwerts von den Kalibrierungen des bestimmten Zustandes und der Konfidenz in Abhängigkeit der Anzahl redundanter Messungen vorgenommen wird.

7.  Verfahren zur Implementierung in einem Meßsystem mit einem Sensorsystem und einer Recheneinheit zur Erkennung eines Defekts in dem Meßsystem nach einem der voranstehenden Ansprüche, **dadurch gekennzeichnet, daß** auf die Fehlermeldung eine Fehleridentifikation vorgenommen wird, bei der ein erstes Element der Messung y entfernt und für diese reduzierte Messung **y** der Zustand **x** bestimmt wird, anschließend der Kostenfunktionswert dieser reduzierten Messung ermittelt wird, die Identifikation des Fehlers angenommen wird, wenn auf der Basis dieses Kostenfunktionswertes der jeweils vorgegebene Schwellwert unterschritten wurde und bei Nicht-Unterschreiten des vorgegebenen Schwellwertes permutativ andere Elemente der Messung entfernt werden bis der Schwellwert unterschritten wird und damit der Fehler identifiziert wird.

8.  Verfahren zur Implementierung in einem Meßsystem mit einem Sensorsystem und einer Recheneinheit zur Erkennung eines Defekts in dem Meßsystem nach einem der voranstehenden Ansprüche, **dadurch gekennzeichnet, daß** die Ableitung der zumindest einen Zustandsgröße des Systems durch eine direkte Ableitung der Zustandsgrössen aus Meßgrössen erfolgt.

9.  Verfahren zur Implementierung in einem Meßsystem mit einem Sensorsystem und einer Recheneinheit zur Erkennung eines Defekts in dem Meßsystem nach einem der voranstehenden Ansprüche 1 bis 7, **dadurch gekennzeichnet, daß** die Ableitung der zumindest einen Zustandsgröße des Systems aus Meßgrössen mittels einer Kostenfunktion erfolgt, wobei Klibrierungen herangezogen werden, die einen Zusammenhang darstellen, bei dem aus zumindest einer Zustandsgröße Meß- oder Sensor-Werte bestimmbar sind.

10. Verfahren zur Implementierung in einem Meßsystem mit einem Sensorsystem und einer Recheneinheit zur Erkennung eines Defekts in dem Meßsystem nach einem der voranstehenden Ansprüche 1 bis 7, **dadurch gekennzeichnet, daß** die Ableitung der zumindest einen Zustandsgröße des Systems aus Meßgrössen mittels eines Filters erfolgt, mit dem die gesuchten Zustadnsgrössen geschätzt werden.

11. Verfahren zur Implementierung in einem Meßsystem mit einem Sensorsystem und einer Recheneinheit zur Erkennung eines Defekts in dem Meßsystem nach dem Anspruch 1, **dadurch gekennzeichnet, daß** das Sensorsystem ein GPS-, ein Radar- oder ein Inertial-System zur Ermittlung der Lage oder der Position eines Fahrzeuges ist.

12. Verfahren zur Implementierung in einem Meßsystem mit einem Sensorsystem und einer Recheneinheit zur Erkennung eines Defekts in dem Meßsystem nach einem der voranstehenden Ansprüche, **dadurch gekennzeichnet, daß** das Sensorsystem ein Luftdatensystem für ein Luft-Fahrzeug ist.

Fig.